# EUROPEAN PATENT APPLICATION

(11) **EP 3 425 034 A1**
(43) Date of publication of application: **09.01.2019**
(21) Application number: 17425070.4
(22) Date of filing: 04.07.2017
(51) Int. Cl.: C11B 15/00, B01D 9/00

(54) **CRYSTALLIZER, FRACTIONATION SYSTEM FOR EDIBLE OILS AND FATS AND METHOD FOR FRACTIONATION OF EDIBLE OILS AND FATS**

(71) Applicant: Alfa Laval Corporate AB, 221 00 Lund (SE)
(72) Inventor: BALDINI, Raffaele, 48017 San Patrizio Conselice (RA) (IT)
(74) Representative: Alfa Laval Attorneys

(57) **Abstract**

A crystallizer (4) for edible oils or fats comprising a vessel (6), a rotor (11) rotatably arranged in said vessel (6) rotatable around a vertical rotational axis (x), in which rotor (11) a plurality of axially elongated parallel tubes (12) are arranged at a distance from each other, an inlet (7) at the top of said vessel (6) which inlet (7) is arranged to convey the edible oils or fats into said vessel (6), an outlet (8) at the bottom of said vessel (6) which outlet (8) is arranged to convey a crystal slurry, formed in the vessel (6) from the edible oils or fats, out of said vessel (6), an inlet pipe (9) arranged to convey a cooling medium into said vessel (6) and rotor (11), wherein the inlet pipe (9) is connected to first end openings of said parallel tubes (12) for further conveying said cooling medium into said parallel tubes (12), and an outlet pipe (10) arranged to convey said cooling medium from said rotor (11) out of the vessel (6), wherein the outlet pipe (10) is connected to second end openings of said parallel tubes (12).

## Description

### Technical field

The invention relates to a crystallizer. The invention also relates to a fractionation system for edible oils and fats comprising such a crystallizer. The invention also relates to a method for fractionation of edible oils and fats.

### Background art

In order to modify edible oils and fats, such as palm oil or animal fat, a fractionation process may be used. In a fractionation process the starting material is fractioned into distinct products with different physical properties and melting points. One such product is a liquid product with a low melting point commonly known as olein, characterized by being enriched in unsaturated fatty acids. Another products is a solid product with higher melting point commonly called stearin, characterized by being enriched in saturated fatty acids. By separating the oils and fats into liquid and solid fractions, products may be created that match exact customer specifications. The process comprises gently cooling of the oil or fat in a controlled process, forming a crystal slurry as certain components crystallize, and then separating the crystals from the crystal slurry.

The crystallization is performed in a crystallizer which typically comprises a vessel where the starting product is fed into one end and crystal slurry is removed from the other end. Cooling medium, often water, is fed through a pipe running through the vessel cooling the slurry which at the same time is mixed by a stirring device or impeller.

The filtration is often performed in a filter press or a membrane filter arranged downstream the crystallizer, where after the components are transported to a specific storage tank or to be used in a further food process or the like.

In a typical fractionation process of palm oil, the oil is often heated in a heater before transported to a crystallizer. In the crystallizer stearin crystals are precipitated forming a crystal slurry. The stearin crystals are then filtered out from the slurry leaving a rest of olein. Especially from palm oil as starting material, olein is the main product and the goal is as high yield as possible. While the two products have entirely different properties they may both be usable.

In the crystallization process it is important that the cooling of the oil is performed slowly to obtain crystals of good quality and large dimensions. In order to get an even temperature in the vessel a mechanical impeller is often used. This also has negative effects as the impeller tends to break the crystals and prevent them to grow. A mechanical impeller tends also to have a high electricity consumption.

### Summary

An object of the present invention is to provide a crystallizer and a fractionation system which reduce the problems mentioned above, leading to a higher yield of the desirable end product.

The crystallizer and the fractionation system for achieving the objects above are defined in the appended claims and discussed below.

A crystallizer for edible oils or fats according to the present invention comprises a vessel. In the vessel a rotor is rotatably arranged around a vertical rotational axis. In the rotor a plurality of axially elongated parallel tubes are arranged at a distance from each other. The vessel comprises an inlet at the top of said vessel, which inlet is arranged to convey the edible oils or fats into said vessel, and an outlet at the bottom of said vessel, which outlet is arranged to convey a crystal slurry, formed in the vessel from the edible oils or fats, out of said vessel.

The vessel further comprises an inlet pipe arranged to convey a cooling medium into said vessel and rotor, wherein the inlet pipe is connected to first end openings of said parallel tubes for further conveying said cooling medium into said parallel tubes.

The vessel also comprises an outlet pipe arranged to convey said cooling medium from said rotor out of the vessel, wherein the outlet pipe is connected to second end openings of said parallel tubes.

By having a rotating rotor with cooling medium filled tubes an even or substantially even cooling effect on the edible oils or fats in the vessel may be obtained. Thereby an even crystallization of the edible oils or fats may be obtained.

In addition, a gentle stirring of the crystal slurry minimizing destruction of large crystals forming is also provided.

The rotating rotor may also be associated with a relatively low energy consumption. This may be due to the fact that the rotating rotor does not primarily aim to cause co-rotation of the total volume of edible oils or fats present in the vessel.

The edible oils or fats to be treated in the crystallizer may be liquidized before introduced into the crystallizer, if needed.

The first end openings may be at the lower end of said parallel tubes and said second end openings may be at the upper end of said parallel tubes.

That means that the flow of cooling medium from the bottom to the top is directed against the flow of the edible oils or fat which runs from the top to the bottom when introduced into the vessel via the inlet at the top of the vessel.

A baffle arrangement may be attached to the rotor which is arranged to counteract co-rotation of the edible oils or fats.

The rotating rotor brings the crystal slurry in rotation against a certain inertia, i.e. the crystal slurry will rotate in the same direction but with a slower speed. The baffle arrangement gently breaks up this rotation and thus provides gentle stirring of the crystal slurry. Thereby the baffle arrangement may provide a further improvement of the even or substantially cooling effect and/or minimization of the destruction of the large crystals.

The baffle arrangement provides a homogeneous distribution of crystals in the slurry by some of them being pushed to the top and thus introduced into the fresh oils or fats for a better stirring effect and a fast process, which enables better yield.

The baffle arrangement also counteracts solids settling at the bottom of the equipment, and facilitates for the crystals to go to the outlet of the vessel.

The baffle arrangement may comprise down-winding spiral-formed baffle attached to the rotor and winding around the rotational axis.

The rotor may comprise a distributor, arranged to distribute the cooling medium coming from the inlet pipe into first end openings of each of the parallel tubes.

The distributor provides an even distribution of cooling medium flow to the parallel tubes.

The baffle arrangement may comprise one or more metal sheets arranged with a distance from each other along the rotational axis and inclined in relation to a horizontal plane.

The metal sheets may be inclined in different directions in relation to said horizontal plane.

The baffle arrangement may comprise a baffle arranged on top of the distributor with an angle horizontally to said distributor.

The inlet pipe may be divided in a stationary first part and a rotating second part attached to said rotor.

A sealing device may be arranged between the stationary first part and the rotating second part of the inlet pipe.

The outlet pipe may be divided in a stationary first part and a rotating second part attached to said rotor.

A sealing device may be arranged between the stationary first part and the rotating second part of the outlet pipe.

At least one crystallizer according to the above may be comprised in a fractionation system for fractionation of edible oils and fats into components, which then further comprises a filter device for separating crystals from said crystal slurry.

Another aspect of the invention relates to a method for fractionation of edible oils or fats using at least one crystallizer according to anyone of the embodiments described above. Said method comprises the steps of: providing liquid or liquidized edible oils or fats, continuously feeding said provided oils or fats to said inlet at the top of said vessel, cooling said provided oils or fat so that a crystal slurry is formed in said vessel by feeding cooling media to said inlet pipe into said vessel which inlet conveys said cooling media into said first end openings of said parallel tubes comprised by said rotor, continuously withdrawing said crystal slurry from said outlet pipe at the bottom of said vessel connected to said second end openings of said parallel tubes, feeding said crystal slurry into a filter device, separating the crystals from said crystal slurry.

The method may be a method wherein the edible oil is a palm oil.

Examples of other suitable oils and fats may be selected from the non-limiting group of palm kernel oil, coconut oil, tallow, lard, soybean oil, canola or rapeseed oil, cottonseed oil, corn or maize oil, sunflower oil, safflower oil, rice bran oil, olive oil, cocoa butter, Sal fats, illipe butter, milk butter, fish oils, groundnut oil, Camelia oil, various types of exotic fats and oils, and oil-derivatives such as fatty acid ethyl or methyl esters.

Still other objectives, features, aspects and advantages of the invention will appear from the following detailed description as well as from the drawings.

### Brief description of the drawings

The invention will now be described in more detail with reference to the appended schematic drawings, in which:
figure 1 is a schematic view of a fractionation system according to the invention;
figure 2 is a cross-sectional view of a crystallizer according to the invention; and
figure 3 is a radial cross-sectional view of a rotor of an embodiment of the crystallizer according to figure 2.

### Detailed description

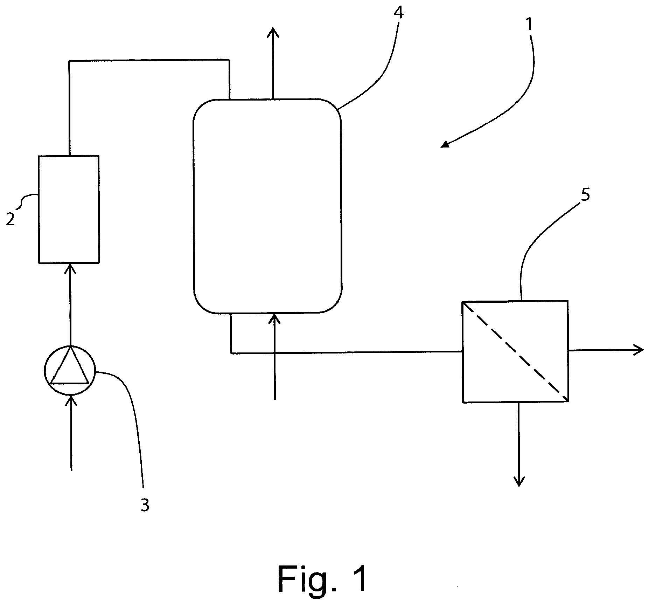

With reference to figure 1, a fractionation system 1 for edible oils and fats is shown. It may as in the figure comprise a heater 2 for preheating the starting material to a suitable temperature. A typical starting temperature for the fractionation of palm oil may be between 40 and 60° C. There may be different suitable starting temperatures if the starting material is different. Often the edible oils or fats is fed to the heater by a pumping device 3. The pre-heated oils or fats is then lead to a crystallizer 4. There may in some applications be more than one crystallizer in parallel, e.g. to provide the possibility of continuous operation also if service is needed on one of the crystallizers, or to enhance the capacity of the system. In the crystallizer the edible oils or fats is cooled so that a hard fat or oil component is continuously crystallized creating a crystal slurry, a mix of crystals and liquid content. In palm oil, which is just an example, the crystals comprise mainly palm stearin and the liquid comprises mainly palm olein.

The crystal slurry is then transported to a separating device 5, which e.g. may be a filter press or a membrane filter. The crystal slurry is there separated into a solid crystal component and a liquid component. The crystal component and the liquid component may then be led to separate storage devices or to further processing steps.

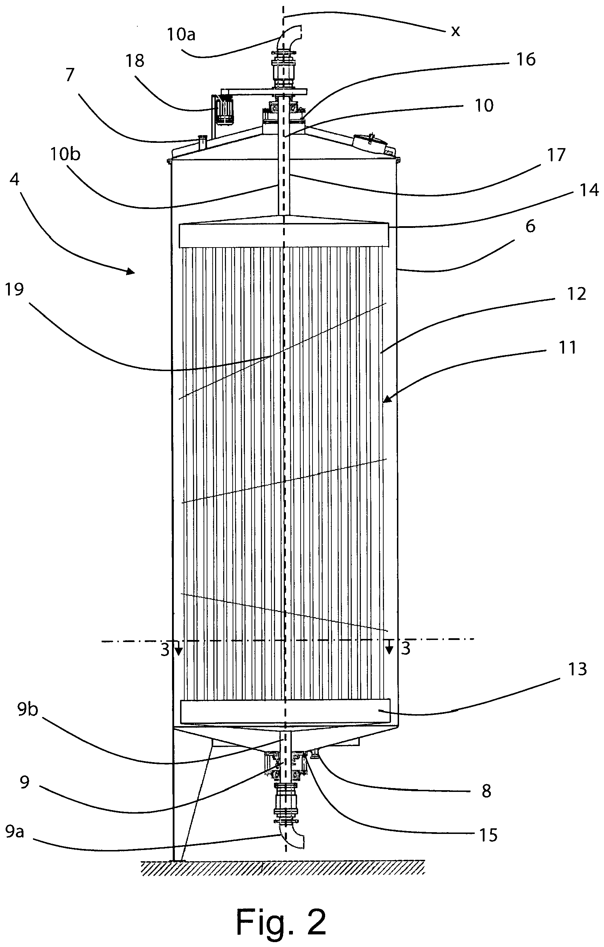

In figure 2, a crystallizer 4 is shown which comprises a vertical vessel 6. The vessel has an inlet 7 for the starting product of edible oils or fats at the top and an outlet 8 for the crystal slurry at the bottom of the vessel 6. At the bottom of the vessel 6 is also an inlet pipe 9 for cooling medium and at the top is an outlet pipe 10 for the same.

A rotor 11 is rotatably arranged in the vessel 6 around a vertical rotational axis x. The rotor 11 comprises a spindle 17 coinciding with the rotational axis x which spindle 17 is rotated by an electric motor 18. A plurality of axial elongated parallel tubes 12 are arranged in the rotor 11. The rotor 11 comprises a distributor 13 which distributor is arranged at the bottom of it. The distributor 13 divides the flow of cooling medium coming from the inlet pipe 9 into first end openings of each of the vertical tubes 12. Correspondingly, a collector 14 is arranged at the top of the rotor 11, which collector 14 collects the flow of cooling medium coming from second end openings of each of the vertical tubes 12 and further out through the outlet pipe 10.

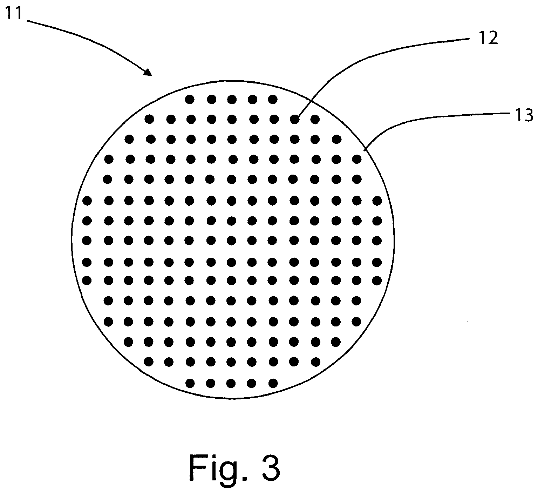

The tubes are arranged at a distance from each other so that the edible oils or fats may freely flow between them and to ensure an effective and even cooling. Different patterns of the tube arrangement may be used. In the example according to figures 2 and 3 the tubes 12 have been placed evenly over a radial cross-section. Other patterns are possible like a cross-pattern with tubes placed evenly along one diameter or along 2 perpendicular diameters. Then tubes are sweeping over the whole radial cross section when the rotor 11 is rotating.

The rotor 11 is journalled by an upper bearing in the vessel 6 at the top of the vessel 6. The inlet pipe 9 is divided in a stationary first part 9a and a rotating second part 9b. Between the stationary first part 9a and the rotating second part 9b a sealing device 15 is arranged sealing the inlet flow of cooling medium. Correspondingly, the outlet pipe 10 is divided in a stationary first part 10a and a rotating second part 10b, between which a sealing device 16 is arranged sealing the outlet flow of cooling medium.

The rotor 11 has a baffle arrangement 19 winding down around the rotational axis x like a spiral. The baffle arrangement 19 may be a spiral formed baffle of metal sheet with the parallel tubes 12 threaded or drawn through holes in it.

In another embodiment, the baffle arrangement 19 may comprise one or more metal sheets arranged with a distance from each other along the rotational axis x and inclined in relation to a horizontal plane. The metal sheets may be inclined in different directions in relation to said horizontal plane.

As an addition to the embodiments above or as an alternative, the baffle arrangement may be a baffle in the form of a metal sheet on top of the distributor 13 arranged with an angle horizontally to the distributor 13 in order to convey the crystal slurry, out towards the circumference of the vessel 6, in order to avoid encrustation and deposits, so that said crystal slurry is forced to exit via the slurry outlet 8.

The above described embodiments of the present invention should only be seen as examples. A person skilled in the art realizes that the embodiments discussed can be varied and combined in a number of ways without deviating from the inventive conception.

It should be stressed that a description of details not relevant to the present invention has been omitted and that the figures are just schematic and not drawn according to scale. It should also be said that some of the figures have been more simplified than others. Therefore, some components may be illustrated in one figure but left out on another figure.

## Claims

1. A crystallizer (4) for edible oils or fats comprising:
- a vessel (6);
- a rotor (11) rotatably arranged in said vessel (6) around a vertical rotational axis (x), in which rotor (11) a plurality of axially elongated parallel tubes (12) are arranged at a distance from each other;
- an inlet (7) at the top of said vessel (6) which inlet (7) is arranged to convey the edible oils or fats into said vessel (6);
- an outlet (8) at the bottom of said vessel (6) which outlet (8) is arranged to convey a crystal slurry, formed in the vessel (6) from the edible oils or fats, out of said vessel (6);
- an inlet pipe (9) arranged to convey a cooling medium into said vessel (6) and rotor (11), wherein the inlet pipe (9) is connected to first end openings of said parallel tubes (12) for further conveying said cooling medium into said parallel tubes (12); and
- an outlet pipe (10) arranged to convey said cooling medium from said rotor (11) out of the vessel (6), wherein the outlet pipe (10) is connected to second end openings of said parallel tubes (12).

2. A crystallizer according to claim 1, wherein said first end openings are at the lower end of said parallel tubes (12) and said second end openings are at the upper end of said parallel tubes (12).

3. A crystallizer according to any one of claims 1 or 2, wherein a baffle arrangement (19) is attached to the rotor (11) arranged to counteract co-rotation of the edible oils or fats.

4. A crystallizer according to claim 3, wherein the baffle arrangement (19) comprises a down-winding spiral formed baffle (19) attached to the rotor (11) and winding around the rotational axis (x).

5. A crystallizer according to any one of claims 3-4, wherein the rotor (11) comprises a distributor (13), arranged to distribute the cooling medium coming from the inlet pipe (9) into first end openings of each of the parallel tubes (12).

6. A crystallizer according to claim 3, wherein the baffle arrangement (19) comprises one or more metal sheets arranged with a distance from each other along the rotational axis (x) and inclined in relation to a horizontal plane.

7. A crystallizer according to claim 6, wherein said metal sheets are inclined in different directions in relation to said horizontal plane.

8. A crystallizer according to any one of claims 3-7, wherein the baffle arrangement (19) comprises a baffle arranged on top of the distributor (13) with an angle horizontally to said distributor (13).

9. A crystallizer according to any one of the preceding claims, wherein the inlet pipe (9) is divided in a stationary first part (9a) and a rotating second part (9b) attached to said rotor (11).

10. A crystallizer according to claim 9, wherein a sealing device (15) is arranged between the stationary first part (9a) and the rotating second part (9b) of the inlet pipe (9).

11. A crystallizer according to any one of the preceding claims, wherein the outlet pipe (10) is divided in a stationary first part (10a) and a rotating second part (10b) attached to said rotor (11).

12. A crystallizer according to claim 11, wherein a sealing device (16) is arranged between the stationary first part (10a) and the rotating second part (10b) of the outlet pipe (10).

13. A fractionation system for fractionation of edible oils and fats into components, comprising at least one crystallizer according to any one of claims 1-12, further comprising a filter device for separating crystals from said crystal slurry.

14. Method for fractionation of edible oils or fats using at least one crystallizer according to any one of claims 1-12, said method comprising the steps of:
- providing liquid or liquidized edible oil or fat;
- continuously feeding said provided oil or fat into said vessel via the inlet at the top of said vessel;
- cooling said provided oil or fat so that a crystal slurry is formed in said vessel by feeding cooling medium into said vessel and rotor via said inlet pipe and said first end openings of said parallel tubes comprised by said rotor;
- continuously withdrawing said crystal slurry from said outlet at the bottom of said vessel (6);
- feeding said withdrawn crystal slurry into a filter device;
- separating crystals from said crystal slurry; and
- continuously withdrawing said cooling medium from said outlet pipe and said second end openings of said parallel tubes comprised by said rotor.

15. Method according to claim 14, wherein the edible oil is a palm oil.

16. Method according to claim 15, wherein the edible oils or fats are selected from the group of palm kernel oil, coconut oil, tallow, lard, soybean oil, canola or rapeseed oil, cottonseed oil, corn or maize oil, sunflower oil, safflower oil, rice bran oil, olive oil, cocoa butter, Sal fats, illipe butter, milk butter, fish oils, groundnut oil, Camelia oil, various types of exotic fats and oils, and oil-derivatives such as fatty acid ethyl or methyl esters.
